# EUROPÄISCHE PATENTSCHRIFT

(11) **EP 0 794 677 B1**
(45) Veröffentlichungstag und Bekanntmachung des Hinweises auf die Patenterteilung: **21.04.2004**
(21) Anmeldenummer: 97103172.9
(22) Anmeldetag: 27.02.1997
(51) Int. Cl.: H04N 9/78

(54) **Verfahren und Schaltungsanordnung zum Trennen von Luminanz- und Chrominanzsignalen eines FBAS-Signals**
Method and circuit arrangement for separating luminance and chrominance signals from a composite colour signal
Procédé et circuit pour la séparation des signaux de luminance et de chrominance dans un signal composite de couleur

(30) Priorität: 09.03.1996 DE 19609193
(43) Veröffentlichungstag der Anmeldung: 10.09.1997
(73) Patentinhaber: DEUTSCHE THOMSON-BRANDT GMBH, 78048 Villingen-Schwenningen (DE)
(72) Erfinder: Hütter, Ingo, 29223 Celle (DE)
(74) Vertreter: Hartnack, Wolfgang, Dipl.-Ing.

(56) Entgegenhaltungen:
- EP-A- 0 590 831
- US-A- 5 424 784
- MASAHIKO ACHIHA ET AL: "MOTION-ADAPTIVE ENHANCED DECODER AND UP-CONVERTER FOR PAL SIGNALS" 13.Juni 1991 , BROADCAST SESSIONS, MONTREUX, JUNE 13 - 18, 1991, VOL. -, NR. -, PAGE(S) 197 - 208 , CCITT XP000268889 * Seite 206; Abbildungen 17,18 *
- IEEE TRANSACTIONS ON CONSUMER ELECTRONICS, Bd. 35, Nr. 3, 1.August 1989, Seiten 259-265, XP000065819 ATSUSHI ISHIZU ET AL: "DIGITAL SIGNAL PROCESSING FOR IMPROVED NTSC TELEVISION RECEIVER"

## Beschreibung

Die Erfindung betrifft ein Verfahren und eine Schaltungsanordnung zum Trennen von Luminanz- und Chrominanzsignalen eines FBAS-Signals, insbesondere eine Kammfilter-Anordnung für PAL-Signale.

### Stand der Technik

Bei analogen Farbfernseh-Übertragungsverfahren besteht das übertragene FBAS-Signal aus Luminanz- und Chrominanz-Signalen. Das Chrominanzsignal seinerseits setzt sich bei PAL und NTSC aus zwei Farbdifferenzsignalen zusammen (U/V-Signale bei PAL, I/Q-Signale bei NTSC), die in Quadraturphase auf einen Farbträger moduliert werden.

In einem Fernsehempfänger müssen die Luminanz- und Chrominanzsignale wieder voneinander getrennt werden, um eine separate Weiterverarbeitung zu ermöglichen. Hierfür werden Kammfilter eingesetzt, die auf der Basis von Zeilen-, Halbbild- und Bildverzögerungen zur Signaltrennung eine Verknüpfung von mehreren benachbarten Zeilen durchführen. Dabei ist es üblich, mit einer bildinhaltsabhängigen Steuerung zu arbeiten, die, je nachdem wie die Chrominanzsignale strukturiert sind, zwischen verschiedenen Filteralgorithmen umschaltet.

Bei herkömmlichen Kammfiltern, die das FBAS-Signal in das Luminanzsignal und das aus den beiden noch zu demodulierenden Farbdifferenzsignalen bestehende Chrominanzsignal aufspalten, erfolgt insbesondere das Erkennen von Farbkanten nicht immer fehlerfrei. Dieses kann zu einer unvollständigen Trennung der Luminanz- und Chrominanzsignale führen, so daß Cross-Effekte häufig nicht völlig vermieden werden können.

In dem Artikel von Masahiko Achiha et al. "Motion-adaptive Enhanced Decoder and Up-Converter for PAL Signals", 13. Juni 1991, Broadcast Sessions, Montreux, June 13 - 18, 1991, Seiten 197 - 208, wird ein Bewegungsdetektionsschema beschrieben, das auf Differenzen zwischen Vollbildern eines PAL Signals beruht. Eine bewegungsabhängige Luminanz-Chrominanz-Separation wird beschrieben, wobei Farbkomponentensignale und das FBAS-Signal ausgewertet werden.

In dem Artikel IEEE Transactions on Consumer Electronics, Bd. 35, Nr. 3, 1. August 1989, Seiten 259 - 265, Atsushi Ishizu et al. "Digital Signal Processing For Improved NTSC Television Receiver" wird ebenfalls eine bewegungsabhängige Verarbeitung von Fernsehsignalen offenbart, bei der für die Separation von Luminanz- und Chrominanzsignalen zeitliche Änderungen aus der Differenz von aufeinanderfolgenden Vollbildern ermittelt werden.

### Erfindung

Der Erfindung liegt die Aufgabe zugrunde, ein Verfahren zum Trennen von Luminanz- und Chrominanzsignalen eines FBAS-Signals anzugeben, um insbesondere das Auftreten von Cross-Effekten, wie z. B. die als sogenannte "Hanging Dots" bekannten Kammfilterfehler, zu minimieren. Diese Aufgabe wird durch das in Anspruch 1 angegebene Verfahren gelöst.

Der Erfindung liegt die weitere Aufgabe zugrunde, eine Schaltungsanordnung zum Trennen von Luminanz- und Chrominanzsignalen eines FBAS-Signals anzugeben. Diese Aufgabe wird durch die in Anspruch 6 angegebenene Schaltungsanordnung gelöst.

Eine bessere Detektion von Farbkanten als bei bekannten Kammfiltern und damit eine verbesserte Trennung der Luminanz- und Chrominanzsignale kann erreicht werden, wenn zur Entscheidungsfindung der optimalen Zeilenverknüpfung, d.h. zur Auswahl des optimalen Filteralgorithmus, auch die Struktur des Luminanzsignales untersucht wird.

Im Prinzip besteht daher das erfindungsgemäße Verfahren zum Trennen von Luminanz- und Chrominanzsignalen eines FBAS-Signals durch eine Verknüpfung von mehreren Bildzeilen, bei dem von verschiedenen Verknüpfungen eine Verknüpfung ausgewählt wird, darin, daß zunächst aus dem FBAS-Signal zwei Farbkomponentensignale demoduliert werden, die zusammen mit dem FBAS-Signal zur Bestimmung der auszuwählenden Verknüpfung ausgewertet werden und dann durch die ausgewählte Verknüpfung ein Luminanzsignal und Farbdifferenzsignale generiert werden.

Vorteilhaft wird dabei nur der tieffrequente Anteil des FBAS-Signals ausgewertet, wobei die Farbkomponentensignale neben den Farbdifferenzsignalen noch den hochfrequenten Anteil der Luminanzsignale enthalten.

Vorzugsweise werden hierbei sowohl das FBAS-Signal als auch die Farbkomponentensignale jeweils um eine ganze Anzahl von Zeilen und um das Doppelte dieser Anzahl verzögert und aus dem hochfrequenten Anteil des FBAS-Signals sowie den Farbkomponentensignalen von drei nicht-, einfach- und doppeltverzögerten Zeilen durch eine Wichtung entsprechend der optimalen Verknüpfung die Farbdifferenzsignale sowie die hochfrequenten Luminanzsignale der einfachverzögerten Zeile generiert.

Hierbei kann nach Generierung der Farbdifferenz- und hochfrequenten Luminanzsignale eine Mittelung der Farbdifferenzsignale über mehrere Zeilen durchgeführt werden und zu dem hochfrequenten Luminanzsignal der tieffrequente Anteil des einfachverzögerten FBAS-Signals addiert werden.

Besonders vorteilhaft ist es hierbei, wenn
a)
   - in einer von den Farbkomponentensignalen aufgespannten komplexen Ebene für jeweils zwei Bildzeilen ein erster Abstandswert bestimmt wird, welcher dem Abstand der durch die beiden Farbkomponentensignale gegebenen Farbsignale der beiden Zeilen entspricht,
   - diese ersten Abstandswerte mit vorgewählten Werten oder ersten Abstandswerten, die sich für eine andere Zeilenkombination ergeben, oder einem Bruchteil dieser ersten Abstandswerte verglichen wird, wobei auch mehrere Vergleiche gleichzeitig durchgeführt werden können,
   - und in Abhängigkeit von dem Vergleichsergebnis entweder ersten Entscheidungssignalen ein bestimmter Wert zugewiesen wird oder ein weiterer Vergleich durchgeführt wird,
b)
   - für jeweils zwei Bildzeilen ein Differenzwert bestimmt wird, welcher dem Betrag der Differenz der tieffrequenten Anteile der FBAS-Signale der beiden Zeilen entspricht,
   - dieser Differenzwert mit vorgewählten Werten oder Differenzwerten, die sich für eine andere Zeilenkombination ergeben, oder einem Bruchteil dieser Differenzwerte verglichen wird, wobei auch mehrere Vergleiche gleichzeitig durchgeführt werden können,
   - und in Abhängigkeit von dem Vergleichsergebnis entweder zweiten Entscheidungssignalen ein bestimmter Wert zugewiesen wird oder ein weiterer Vergleich durchgeführt wird,
c)
   - in einer von den Farbkomponentensignalen aufgespannten komplexen Ebene ein zweiter und dritter Abstandswert bestimmt wird, wobei der zweite Abstandswert dem Abstand der Summe der durch die beiden Farbkomponentensignale gegebenen Farbsignale zweier Zeilen vom Ursprung und der dritte Abstandswert dem Abstand eines durch die beiden Farbkomponentensignale gegebenen Farbsignals einer Zeile vom Ursprung entspricht,
   - zweite Abstandswerte mit dritten Abstandswerten oder einem Bruchteil dieser dritten Abstandswerte verglichen werden und dritte Abstandswerte einer Zeile mit dritten Abstandswerten einer anderen Zeile oder einem Bruchteil dieser dritten Abstandswerte verglichen werden, wobei auch mehrere Vergleiche gleichzeitig durchgeführt werden können,
   - und in Abhängigkeit von den Vergleichsergebnissen zweiten Entscheidungssignalen jeweils ein Binärwert zugewiesen wird,
d)
   - für beide Farbkomponentensignale erste und zweite Summenwerte bestimmt werden, wobei der erste Summenwert dem Betrag der Summe von einem der beiden Farbkomponentensignale der mehreren Zeilen und der zweite Summenwert der Summe der Beträge von einem der beiden Farbkomponentensignale entspricht, wobei eine unterschiedliche Wichtung der Farbkomponentensignale der verschiedenen Zeilen vorgenommen werden kann
   - erste Summenwerte mit zweiten Summenwerten oder einem Bruchteil dieser zweiten Summenwerte verglichen werden und erste Summenwerte beider Farbkomponenten mit einem bestimmten Wert verglichen werden, wobei auch mehrere Vergleiche gleichzeitig durchgeführt werden können,
   - und in Abhängigkeit von den Vergleichsergebnissen dritten Entscheidungssignalen jeweils ein Binärwert zugewiesen wird.
e)
   und die Entscheidungssignale verwendet werden, um eine Verknüpfung auszuwählen.

Im Prinzip besteht die erfindungsgemäße Schaltungsanordnung darin, daß ein Demodulator vorgesehen ist, der aus dem FBAS-Signal zwei Farbkomponentensignale demoduliert, die zusammen mit dem FBAS-Signal einem Kammfilter zugeführt werden, in dem diese Signale zunächst zur Bestimmung der auszuwählenden Verknüpfung ausgewertet werden und dann durch die ausgewählte Verknüpfung ein Luminanzsignal und Farbdifferenzsignale generiert werden.

Vorteilhaft sind hierbei im Kammfilter Zeilenspeicher vorgesehen, um sowohl das FBAS-Signal als auch die Farbkomponentensignale zu verzögern. Ferner werden die FBASund Farbkomponentensignale der unterschiedlich verzögerten Zeilen einer Entscheidungslogik und einem oder mehreren Schalt- und Mittelungsblöcken zugeführt, in denen die Farbdifferenzsignale sowie die hochfrequenten Luminanzsignale generiert werden.

Vorzugsweise wird das dem Kammfilter zugeführte FBAS-Signal durch eine Hochpaß-Tiefpaß-Kombination in einen Hoch- und einen Tiefpaßanteil zerlegt und dem Schalt- und Mittelungsblock nur der Hochpaßanteil, der Entscheidungslogik nur der Tiefpaßanteil zugeführt.

Ferner werden vorzugsweise zum einen die generierten Farbdifferenzsignale Medianfiltern zugeführt, die eine Mittelung der Farbdifferenzsignale über mehrere Zeilen durchführen, und zum anderen kann ein Addierer vorgesehen werden, um zu dem generierten hochfrequenten Luminanzsignal den tieffrequente Anteil des einfach verzögerten FBAS-Signals zu addieren.

Besonders vorteilhaft weist die Entscheidungslogik einen ersten Block auf, dem die unterschiedlich verzögerten Zeilen zugeführt werden, wobei aus den zugeführten Signalen verschiedene Abstands-, Differenz-, und Summensignale berechnet werden, diese Werte mit vorgewählten Werten oder anderen berechneten Werten verglichen werden und in Abhängigkeit von dem Vergleichsergebnis Entscheidungssignale bestimmt werden, und die Entscheidungssignale einem zweiten Block zugeführt werden, in dem für jede Kombination der Entscheidungssignale ein oder mehrere Entscheidungswerte bestimmt werden, die dem oder den Schalt- und Mittelungsblöcken zur Ansteuerung zugeführt werden.

### Zeichnungen

Anhand der Zeichnungen werden Ausführungsbeispiele der Erfindung beschrieben. Diese zeigen in:
- Fig. 1: die Anordnung eines herkömmlichen Kammfilters und PAL-Demodulators,
- Fig. 2: die Anordnung des erfindungsgemäßen Kammfilters,
- Fig. 3: ein Blockschaltbild des erfindungsgemäßen Kammfilters,
- Fig. 4: ein Blockschaltbild des Logik-Blocks aus Fig. 3,
- Fig. 5: verschiedene mögliche Anordnungen der Zeilen,
- Fig. 6: ein Blockschaltbild des Schalt- und Mittelungsblocks für a) die Luminanzsignale, b) die Chrominanzsignale.

### Ausführungs-Beispiele

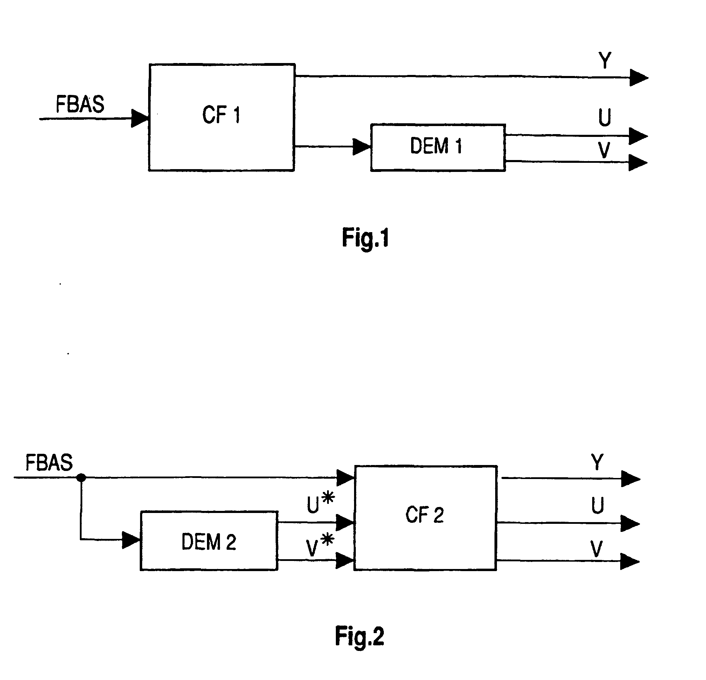

In Fig. 1 ist die Anordnung eines herkömmlichen Kammfilters dargestellt. Das FBAS-Signal FBAS wird erst dem Kammfilter CF1 zugeführt. Durch dieses Kammfilter wird dann das FBAS-Signal FBAS in ein Luminanzsignal Y und ein noch zu demodulierendes Chrominanzsignal aufgespalten. Das Chrominanzsignal wird dann einem Demodulator DEM1 zugeführt, in dem die Farbdifferenzsignale U und V regeneriert werden. Die Algorithmusauswahl beruht hierbei lediglich auf einer Auswertung der hochfrequenten Signalanteile.

Das erfindungsgemäße Kammfilter wird dagegen wie in Fig. 2 dargestellt angeordnet. Das FBAS-Signal FBAS wird zunächst einem Demodulator DEM2 zugeführt. Die von diesem Demodulator DEM2 erzeugten Farbkomponentensignale U* und V* werden dann ebenso wie das FBAS-Signal FBAS dem Kammfilter CF2 zugeführt. Durch das Kammfilter CF2 werden dann aus dem FBAS-Signal die Chrominanzträgersignal-Anteile entfernt und aus den Farbkomponentensignalen U* und V* die dort fälschlicherweise enthaltenen demodulierten hochfrequenten Luminanzsignale entfernt. Das Kammfilter CF2 verarbeitet daher im Gegensatz zu herkömmlichen Kammfiltern demodulierte Chrominanzsignale. Am Ausgang des Kammfilters stehen dann die separierten Luminanz- und Farbdifferenzsignale Y, U, V zur Verfügung.

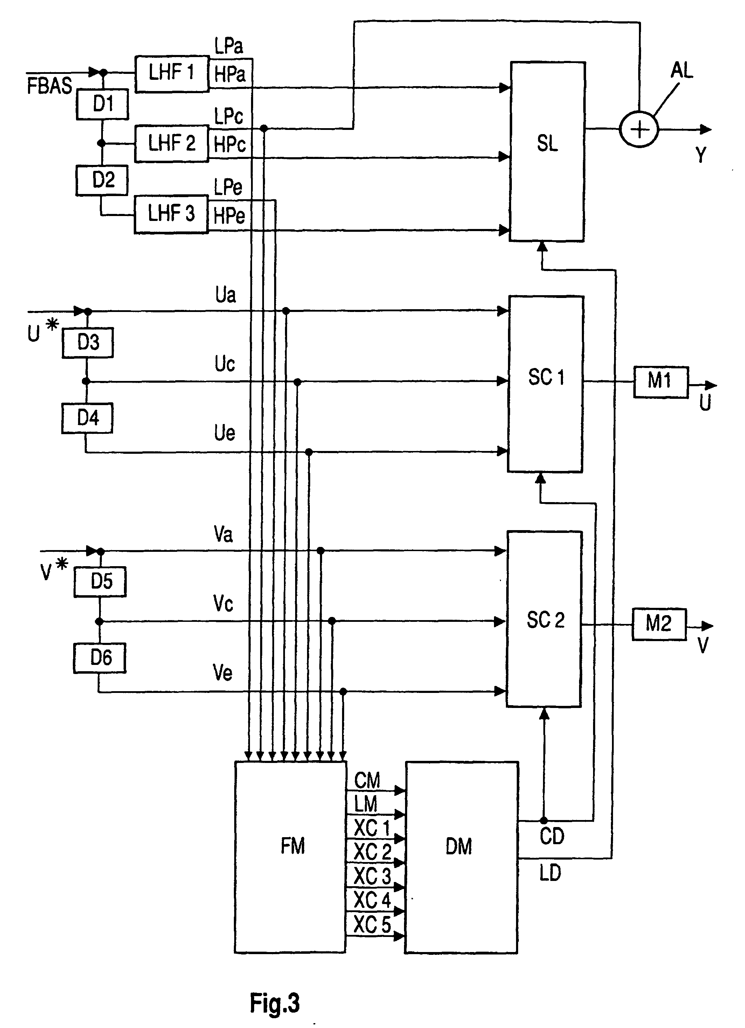

In Fig. 3 ist ein Blockschaltbild des erfindungsgemäßen Kammfilters CF2 dargestellt, wobei exemplarisch für die Zeilen-Kammfilterung eine Verknüpfung von jeweils drei Zeilen erfolgt. Für diesen Fall werden sowohl das FBAS-Signal FBAS als auch die U*- und V*-Signale jeweils in zwei Verzögerungsstufen D1, D2 bzw. D3, D4 oder D5, D6 verzögert. Hierfür werden vorzugsweise Zeilenspeicher, insbesondere FIFO-Speicher, verwendet. Für PAL-Signale erfolgt jeweils eine Verzögerung um zwei Zeilen, für NTSC-Signale jeweils eine Verzögerung um eine Zeile. Die unterschiedlich verzögerten FBAS-Signale werden dann zunächst mit einer Hoch-Tiefpaß-Kombination LHF1, LHF2 oder LHF3 in den jeweiligen Hochpaßanteil HPa, HPc, HPe und Tiefpaßanteil LPa, LPc, LPe zerlegt. Sowohl die Tiefpaßsignale LPa, LPc, LPe, als auch die demodulierten Chrominanzsignale Ua, Uc, Ue bzw. Va, Vc, Ve der unterschiedlich verzögerten Zeilen werden dann einem Logik-Block FM zugeführt. In diesem Block wird analysiert, welche Muster die Signale aufweisen. Je nach erkannter Struktur werden dann den Entscheidungssignalen CM, LM, XC1 bis XC5 bestimmte Werte zugewiesen und dem Block DM zugeführt. In diesem Block sind, z. B. in Tabellenform, für die möglichen Kombinationen der Entscheidungssignale jeweils zwei Entscheidungswerte CD und LD abgelegt. Die Entscheidungswerte dienen hierbei zur Ansteuerung der Schalt- und Mittelungsblöcke für die Luminanz- und Chrominanzsignale. Da von den Luminanzsignalen durch den Schalt- und Mittelungsblock SL nur die jeweiligen Hochpaß-Signale verarbeitet werden, wird zu dem Ausgangssignal dieses Blocks mit Hilfe eines Addierers AL anschließend der tieffrequente Luminanzanteil LPc hinzuaddiert. Bei den Farbdifferenzsignalen folgt im Anschluß an die Blöcke SC1 bzw. SC2 jeweils noch eine Mittelung über mehrere Zeilen mittels eines Medianfilters M1 bzw. M2, der zur Verzögerung der Farbdifferenzsignale Zeilenspeicher aufweisen kann. Mit Hilfe dieser Mittelung werden Schaltartefakte, die insbesondere durch Rauschen verursacht werden können, eliminiert.

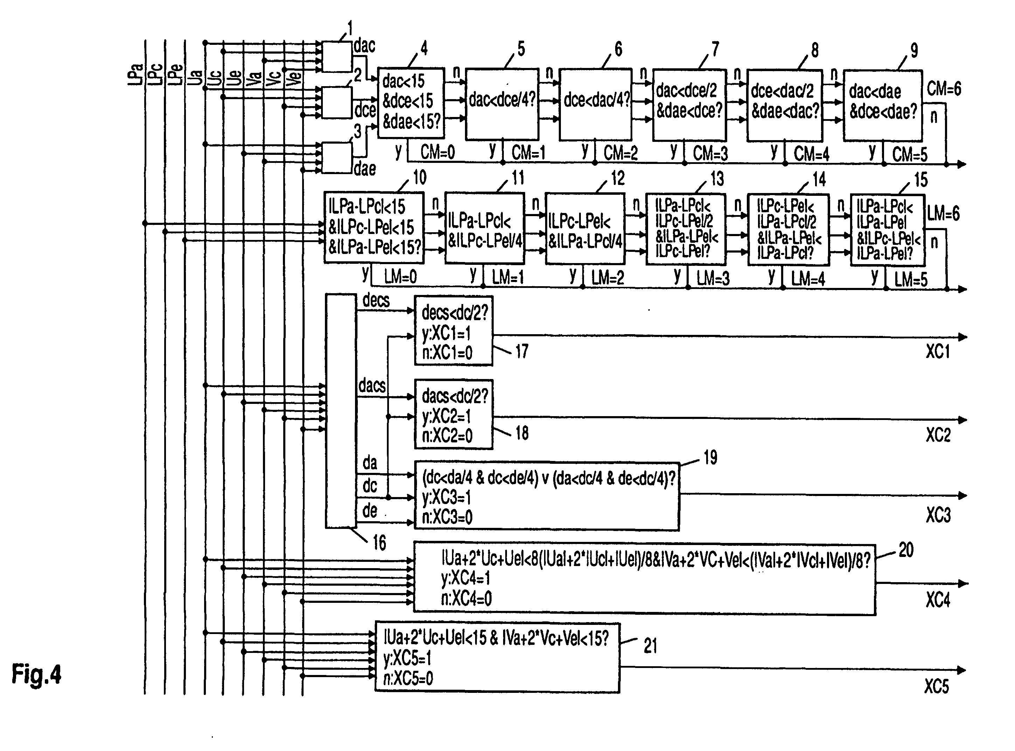

In Fig. 4 ist ein Blockschaltbild des Logik-Blocks FM dargestellt. Der Entscheidungslogik werden die unterschiedlich verzögerten Zeilen zugeführt, wobei aus den zugeführten Signalen verschiedene Abstands-, Differenz-, und Summensignale berechnet werden. Diese Werte werden dann mit vorgewählten Werten oder anderen berechneten Werten verglichen. In Abhängigkeit von dem jeweiligen Vergleichsergebnis werden dann verschiedene Entscheidungssignale bestimmt.

Die Berechnung der verschiedenen Abstands-, Differenz-, und Summensignale wird im folgenden detaillierter beschrieben.

In einer von den Farbkomponentensignalen aufgespannten komplexen Ebene wird für jeweils zwei Bildzeilen ein erster Abstandswert dac, dce oder dae bestimmt, welcher dem Abstand der durch die beiden Farbkomponentensignale U*, V* gegebenen Farbsignale der beiden Zeilen entspricht. So wird in dem Block 1 der Abstandswert dac für die beiden Zeilen a und c bestimmt, und ergibt sich z.B. mit Hilfe des Satzes von Phytagoras zu dac=√[(Uₐ-U_{c})²+(Vₐ-V_{c})²]. Diese ersten Abstandswerte werden dann mit vorgewählten Werten oder ersten Abstandswerten für eine andere Zeilenkombination oder einem Bruchteil dieser ersten Abstandswerte verglichen. So wird in Block 4 geprüft, ob die Abstandswerte dac, dce und dae alle kleiner als eine vorgegebene Schranke mit dem Wert "15" sind. Ist dieses der Fall, so wird dem Entscheidungssignal CM der Wert "0" zugewiesen. Liegt dagegen mindestens einer der Abstandswerte über der vorgegebenen Schranke, so werden die Abstandswerte dem nächsten Vergleichsblock 5 zugeführt. Je nach der Struktur der Chrominanzsignale, d.h. dem Ergebnis der durchgeführten Vergleiche durch die Blöcke 4 bis 9, hat das Entscheidungssignal CM damit einen der Werte zwischen "0" und "6".

Entsprechend werden in den Blöcken 10 bis 15 Vergleiche für Differenzwerte durchgeführt, die sich für die Tiefpaß-Anteile von jeweils zwei Bildzeilen ergeben. In Abhängigkeit von dem Vergleichsergebnis wird dann einem zweiten Entscheidungssignal LM ein Wert zwischen "0" und "6" zugewiesen, der die Struktur im Luminanzanteil der untersuchten Bildzeilen wiederspiegelt.

Für das Erkennen von Cross-Colour-Störungen in verschiedenen Sonderfällen werden ferner im Block 16 noch weitere Abstandswerte bestimmt. So geben die Abstandswerte decs und dacs den Abstand der Summe der Farbsignale der Zeilen e und c bzw. a und c vom Ursprung an. Diese Abstandswerte werden mit dem halben Abstand des Farbsignals der Zeile c vom Ursprung dc verglichen. Ferner wird überprüft, ob der Abstand von c zum Ursprung dc entweder kleiner als ein Viertel der Abstände da und de oder größer als das Vierfache der Abstände da und de ist. In Abhängigkeit von diesen Vergleichsergebnissen werden den Entscheidungssignalen XC1, XC2 und XC3 jeweils entweder der Wert "0" oder "1" zugewiesen.

Ferner werden für die Farbkomponentensignale die Werte |Uₐ,Vₐ+2*U_{c},V_{c}+Uₑ,Vₑ| und (|Uₐ,Vₐ|+2*|U_{c},V_{c}|+|Uₑ,Vₑ|)/8 berechnet und wiederum miteinander oder mit einem bestimmten Schwellwert verglichen, um den Entscheidungssignalen XC4, XC5 jeweils einen Binärwert zuzuweisen.

Es ist zu beachten, daß in dem Blockschaltbild das Verfahren zwar so dargestellt ist, als ob alle Signale mit der gleichen Abtastfrequenz vorliegen würden, Luminanz- und Chrominanzsignale im allgemeinen jedoch verschiedene Abtastfrequenzen (4:1:1) haben. Eine Anpassung könnte jedoch z. B. dadurch erfolgen, daß vor dem Kammfilter eine 4:1-Aufwärts-Konversion der Chrominanzsignale durchgeführt wird.

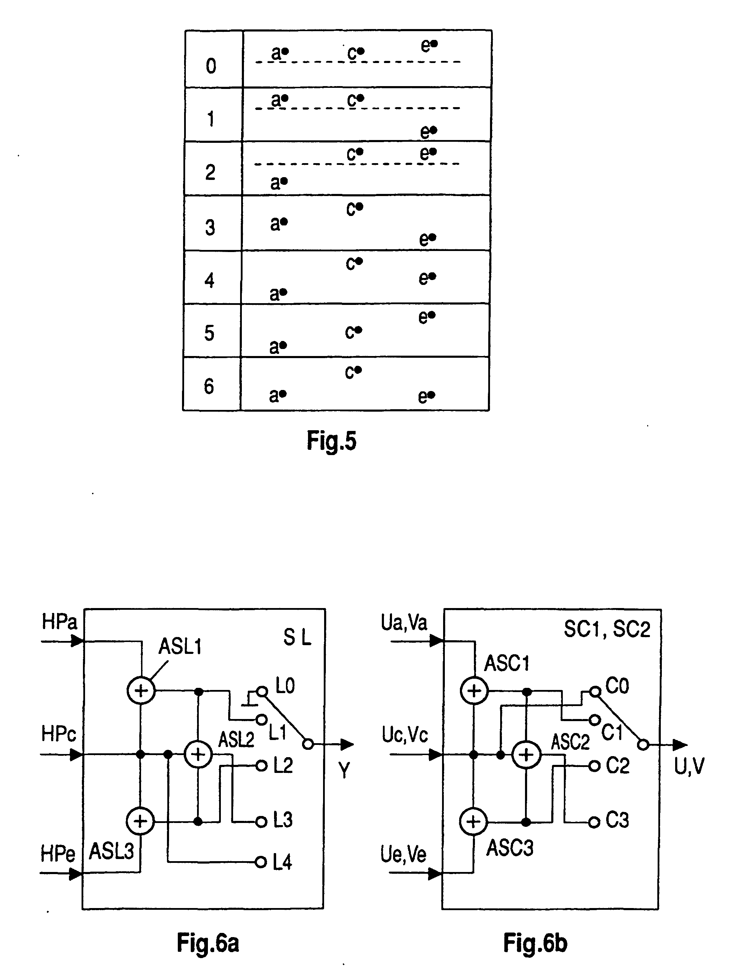

Die den Entscheidungssignalen CM und LM entsprechenden Bildsignal-Modi sind in Fig. 5 veranschaulicht. Für den Modus 0 liegen die Werte aller drei Zeilen innerhalb einer Schranke und damit dicht beieinander. Liegt der Modus 1 vor, so unterscheidet sich die Zeile e deutlich von den Zeilen a und c, es liegt also eine Kante vor. Entsprechend liegt auch bei Modus 2 eine Kante vor, denn Zeile a unterscheidet sich deutlich von den Zeilen c und e. Bei Modus 3 liegt die Zeile a zwischen den Zeilen c und e, bei Modus 4 die Zeile e zwischen den Zeilen a und c. Bei Modus 5 schließlich liegen alle Zeilen etwa in einer Linie, bei Modus 6 im Zickzack.

Die Ergebniswerte CM, LM, XC1 - XC5 werden in dem Block DM ausgewertet. Es wird für jede Kombination der beiden Entscheidungssignale CM und LM entschieden, wie die Chrominanzsignale bzw. Hochpaß-Luminanzsignale verarbeitet werden sollen. Hierfür werden die Entscheidungswerte CD bzw. LD bestimmt, die in den Tabellen 1 bzw. 2 angegeben sind, wobei für manche CM/LM-Kombinationen zwei Entscheidungswerte möglich sind, die von dem aktuellen Binärwert eines weiteren Entscheidungssignals XC1 bis XC5 abhängen.

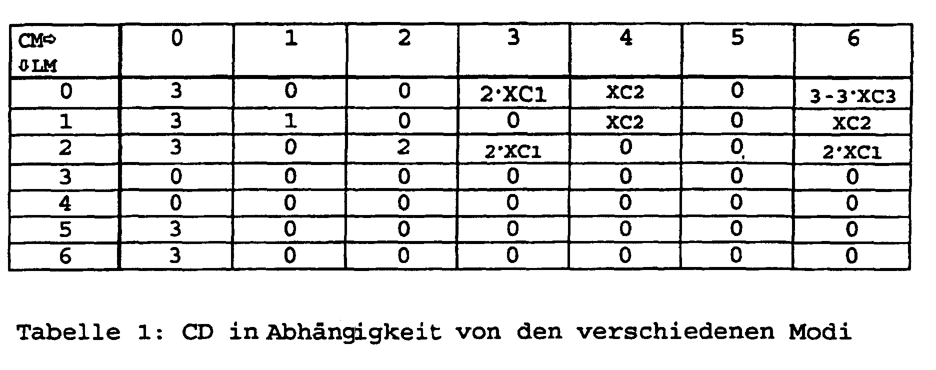

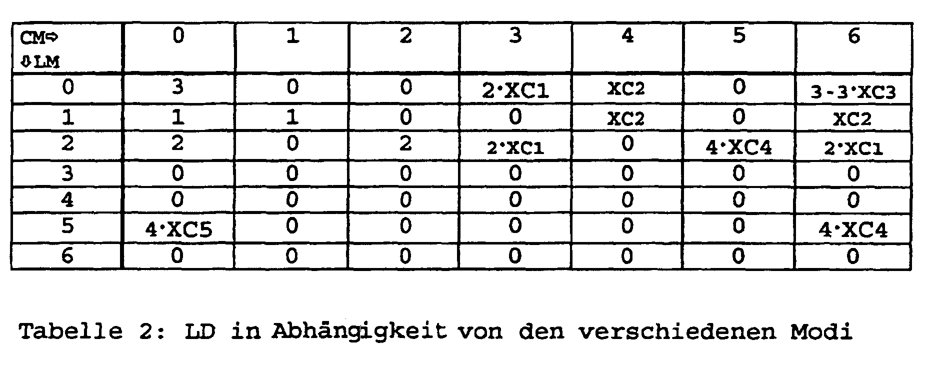

Mit den Entscheidungswerten CD bzw. LD werden die Schaltund Mittelungsblöcke SL bzw. SC1, SC2 angesteuert. Blockschaltbilder dieser beiden Blöcke sind in den Abbildungen 6 a) bzw. b) wiedergegeben. Dem Block SL werden jeweils die hochfrequenten Luminanzsignalanteile HPa, HPc, HPe der Zeilen a, c und e zugeführt. Mit Hilfe der Addierer ASL1 - ASL3 werden dann verschiedene Verknüpfungen der Luminanzsignale berechnet. Diese Verknüpfungen liegen an den Ausgängen L1 - L4 an, so ergibt sich z. B. für L2 ein Ausgangswert HPe + HPc. Bei Verwendung des Ausgangs L0 wird ein 0-Signal erzeugt, d. h. nur das Tiefpaß-Luminanzsignal LPc wird durch den Kammfilter wiedergegeben. Dieses führt dann zwar zu einem Schärfeverlust, jedoch können damit Farbträgerreste, die durch Kombination mit anderen Zeilen nicht reduziert werden können, komplett eliminiert werden.

Sehr ähnlich ist auch der Block SC1 bzw. SC2 aus Fig. 6b aufgebaut. Hierbei liegen die Farbkomponentensignale Ua, Va, Uc, Vc, Ue, Ve an dem Block an und durch eine Verknüpfung mit Hilfe der Addierer ASC1 - ASC3 stehen entsprechende Farbdifferenzsignale an den Ausgängen C0 - C3 zur Verfügung.

Die Erfindung kann ganz oder teilweise in einen Integrierten Schaltkreis integriert werden, jedoch ebenso auch ganz oder teilweise durch Software realisiert werden.

Die Erfindung kann z. B. für PAL- und NTSC-Fernsehsysteme, aber auch für Weiterentwicklungen dieser Systeme genutzt werden. Eine Anwendung ist insbesondere auch bei PALplus-Empfängern möglich.

## Patentansprüche

1. Verfahren zum Trennen von Luminanz- und Chrominanzsignalen eines FBAS-Signals (FBAS) durch eine Verknüpfung von mehreren Bildzeilen, wobei das Verfahren die folgenden Schritte umfasst:
das Demodulieren zweier Farbkomponentensignale (U*, V*) aus dem FBAS-Signal;
das Zuführen der demodulierten Farbkomponentensignale (U*, V*) zusammen mit dem FBAS-Signal (FBAS) zu einem Kammfilter (CF2);
**gekennzeichnet durch**:
das zeilenweise Verzögern des FBAS-Signals und der Farbkomponentensignale im Kammfilter (CF2);
das Analysieren (FM) der räumlichen Signalstruktur der Farbkomponentensignale und des FBAS-Signals der verzögerten und der nichtverzögerten Zeilen;
das Auswählen (DM) einer Verknüpfung mehrerer Bildzeilen basierend auf der analysierten räumlichen Signalstruktur; und
das Erzeugen eines Luminanzsignals (Y) und von Farbdifferenzsignalen (U, V) **durch** die ausgewählte Verknüpfung aus den verzögerten und nichtverzögerten FBAS - bzw. Farbkomponentensignalen.

2. Verfahren nach Anspruch 1, **dadurch gekennzeichnet, daß** beim Analysieren nur der tieffrequente Anteil (LPa, LPc, LPe) des FBAS-Signals ausgewertet wird und die Farbkomponentensignale (U*, V*) neben den Farbdifferenzsignalen (U, V) noch den hochfrequenten Anteil der Luminanzsignale enthalten.

3. Verfahren nach Anspruch 1 oder 2, **dadurch gekennzeichnet, daß** sowohl das FBAS-Signal (FBAS) als auch die Farbkomponentensignale (U*, V*) jeweils um eine ganze Anzahl von Zeilen und um das Doppelte dieser Anzahl verzögert werden und daß aus dem hochfrequenten Anteil des FBAS-Signals sowie den Farbkomponentensignalen von jeweils drei nicht-, einfach- und doppeltverzögerten Zeilen durch eine Wichtung entsprechend der ausgewahlten optimalen Verknüpfung die hochfrequenten Luminanzsignale bzw. die Farbdifferenzsignale der einfachverzögerten Zeile generiert werden.

4. Verfahren nach Anspruch 3, **dadurch gekennzeichnet, daß** nach Generierung der Farbdifferenz- und hochfrequenten Luminanzsignale eine Mittelung (M1, M2) der Farbdifferenzsignale über mehrere Zeilen durchgeführt wird und zu dem hochfrequenten Luminanzsignal der tieffrequente Anteil des einfachverzögerten FBAS-Signals addiert (AL) wird.

5. Verfahren nach einem der Ansprüche 1 bis 4, **dadurch gekennzeichnet, daß**
a)
- in einer von den Farbkomponentensignalen aufgespannten komplexen Ebene für jeweils zwei Bildzeilen ein erster Abstandswert (dac, dce, dae) bestimmt wird, welcher dem Abstand der durch die beiden Farbkomponentensignale (U*, V*) gegebenen Farbsignale der beiden Zeilen entspricht,
- diese ersten Abstandswerte mit vorgewählten Werten oder ersten Abstandswerten, die sich für eine andere Zeilenkombination ergeben, oder einem Bruchteil dieser ersten Abstandswerte verglichen wird, wobei auch mehrere Vergleiche gleichzeitig durchgeführt werden können,
- und in Abhängigkeit von dem Vergleichsergebnis entweder ersten Entscheidungssignalen (CM) ein bestimmter Wert zugewiesen wird oder ein weiterer Vergleich durchgeführt wird,
b)
- für jeweils zwei Bildzeilen ein Differenzwert bestimmt wird, welcher dem Betrag der Differenz der tieffrequenten Anteile der FBAS-Signale der beiden Zeilen entspricht,
- dieser Differenzwert mit vorgewählten Werten oder Differenzwerten, die sich für eine andere Zeilenkombination ergeben, oder einem Bruchteil dieser Differenzwerte verglichen wird, wobei auch mehrere Vergleiche gleichzeitig durchgeführt werden können,
- und in Abhängigkeit von dem Vergleichsergebnis entweder zweiten Entscheidungssignalen (LM) ein bestimmter Wert zugewiesen wird oder ein weiterer Vergleich durchgeführt wird,
c)
- in einer von den Farbkomponentensignalen aufgespannten komplexen Ebene ein zweiter und dritter Abstandswert bestimmt wird, wobei der zweite Abstandswert dem Abstand der Summe der durch die beiden Farbkomponentensignale (U, V) gegebenen Farbsignale zweier Zeilen vom Ursprung (decs, dacs) und der dritte Abstandswert dem Abstand eines durch die beiden Farbkomponentensignale (U*, V*) gegebenen Farbsignals einer Zeile vom Ursprung (da, dc, de) entspricht,
- zweite Abstandswerte mit dritten Abstandswerten oder einem Bruchteil dieser dritten Abstandswerte verglichen werden und dritte Abstandswerte einer Zeile mit dritten Abstandswerten einer anderen Zeile oder einem Bruchteil dieser dritten Abstandswerte verglichen werden, wobei auch mehrere Vergleiche gleichzeitig durchgeführt werden können,
- und in Abhängigkeit von den Vergleichsergebnissen zweite Entscheidungssignalen (XC1, XC2, XC3) jeweils ein Binärwert zugewiesen wird,
d)
- für beide Farbkomponentensignale erste und zweite Summenwerte bestimmt werden, wobei der erste Summenwert dem Betrag der Summe von einem der beiden Farbkomponentensignale (U*, V*) der mehreren Zeilen und der zweite Summenwert der Summe der Beträge von einem der beiden Farbkomponentensignale (U*, V*) entspricht, wobei eine unterschiedliche Wichtung der Farbkomponentensignale der verschiedenen Zeilen vorgenommen werden kann
- erste Summenwerte mit zweiten Summenwerten oder einem Bruchteil dieser zweiten Summenwerte verglichen werden und erste Summenwerte beider Farbkomponenten mit einem bestimmten Wert verglichen werden, wobei auch mehrere Vergleiche gleichzeitig durchgeführt werden können,
- und in Abhängigkeit von den Vergleichsergebnissen dritten Entscheidungssignalen (XC4, XC5) jeweils ein Binärwert zugewiesen wird,
e)
und die Entscheidungssignale (CM, LM, XC1 - XC5) verwendet werden, um eine Verknüpfung auszuwählen.

6. Schaltungsanordnung zum Trennen von Luminanz- und Chrominanzsignalen eines FBAS-Signals (FBAS) durch eine Verknüpfung von mehreren Bildzeilen, wobei ein Demodulator (DEM2) vorgesehen ist, der aus dem FBAS-Signal zwei Farbkomponentensignale (U*, V*) demoduliert, die zusammen mit dem FBAS-Signal (FBAS) einem Kammfilter (CF2) zugeführt werden, **dadurch gekennzeichnet, daß** im Kammfilter (CF2) Zeilenspeicher (D1 - D6) vorgesehen sind, um sowohl das FBAS-Signal als auch die Farbkomponentensignale zu verzögern, und daß die FBAS- und Farbkomponentensignale der unterschiedlich verzögerten Zeilen einer Entscheidungslogik (FM, DM), in der die räumliche Signalstruktur der Farbkomponentensignale und des FBAS-Signals der verzögerten und der nichtverzögerten Zeilen analysiert werden, um eine Verknüpfung mehrerer Bildzeilen auszuwählen, und einem oder mehreren Schaltund Mittelungsblöcken (SL, SC1, SC2) zugeführt werden, in denen gesteuert durch die ausgewählte Verknüpfung ein Luminanzsignal (Y) und Farbdifferenzsignale (U, V) generiert werden.

7. Schaltungsanordnung nach Anspruch 6, **dadurch gekennzeichnet, daß** das dem Kammfilter (CF2) zugeführte FBAS-Signal im kammfilter durch eine Hochpaß-Tiefpaß-Kombination (LHF1, LHF2, LHF3) für die verrögerten und die nichtverzögerten zelten jeweils in einen Hoch- und einen Tiefpaßanteil zerlegt wird und dem Schalt- und Mittelungsblock (SL) nur die Hochpaßanteile, der Entscheidungslogik (FM, DM) nur die Tiefpaßanteile zugeführt werden.

8. Schaltungsanordnung nach einem der Ansprüche 6 - 7,
**dadurch gekennzeichnet, daß** die generierten Farbdifferenzsignale Median-Filtern (M1, M2) zugeführt werden, die eine Mittelung der Farbdifferenzsignale über mehrere Zeilen durchführen, und daß ein Addierer (AL) vorgesehen ist, der zu dem aus den genannten Hochpaßanteilen generierten Luminauzsignal den Tiefpaßanteil des verzögerten FBAS-Signals addiert.

9. Schaltungsanordnung nach einem der Ansprüche 6 - 8, **dadurch gekennzeichnet, daß** die Entscheidungslogik (FM, TM) einen ersten Block (FM) aufweist, dem die unterschiedlich verzögerten Zeilen-zugeführt werden, wobei aus den zugeführten Signalen verschiedene Abstands-, Differenz-, und Summensignale berechnet werden, diese Werte mit vorgewählten Werten oder anderen berechneten Werten verglichen werden, und in Abhängigkeit von dem Vergleichsergebnis Entscheidungssignale bestimmt werden, und wobei die Entscheidungssignale einem zweiten Block (DM) zugeführt werden, in dem für jede Kombination der Entscheidungssignale ein oder mehrere Entscheidungswerte (CD, LD) bestimmt werden, die dem oder den Schalt- und Mittelungsblöcken (SC, SC1, SC2) zur Ansteuerung zugeführt werden.

## Claims

1. Method for separating luminance and chrominance signals of a CVBS signal (CVBS) by a combination of a plurality of picture lines, whereby this method comprises the following steps:
the demodulation of two colour component signals (U*, V*) from the CVBS signal (CVBS);
the feeding of the demodulated colour component signals (U*, V*) together with the CVBS signal (CVBS) to a comb filter (CF2);
**characterized by**:
the line-by-line delay of the CVBS signal and the colour component signals in the comb filter (CF2);
the analysis (FM) of the spatial signal structure of the colour component signals and the CVBS signal of the delayed and the non-delayed lines;
the selection (DM) of a combination of a plurality of picture lines based on the analysed spatial signal structure; and
the generation of a luminance signal (Y) and of colour difference signals (U, V) as a result of the selected combination of the delayed and the non-delayed CVBS or colour component signals, respectively.

2. Method according to Claim 1, **characterized in that** during the analysis only the low-frequency component (LPa, LPc, LPe) of the CVBS signal is evaluated and the colour component signals (U*, V*) still contain the high-frequency component of the luminance signals in addition to the colour difference signals (U, V).

3. Method according to Claim 1 or 2, **characterized in that** both the CVBS signal (CVBS) and the colour component signals (U*, V*) are delayed by a whole number of lines and by double this number, and that the high-frequency luminance signals or the colour difference signals, respectively, of the singly delayed line are generated, by weighting corresponding to the selected optimum combination, from the high-frequency component of the CVBS signal and the colour component signals of three non-delayed, singly delayed and doubly delayed lines each.

4. Method according to Claim 3, **characterized in that** after the colour difference and high-frequency luminance signals have been generated, an averaging (M1, M2) of the colour difference signals over a plurality of lines is carried out and the low-frequency component of the singly delayed CVBS signal is added (AL) to the high-frequency luminance signal.

5. Method according to one of Claims 1 to 4, **characterized in that**
a)
- in a complex plane spanned by the colour component signals, for in each case two picture lines, a first distance value (dac, dce, dae) is determined which corresponds to the distance between the colour signals of the two lines, which colour signals are given by the two colour component signals (U*, V*),
- these first distance values are compared with preselected values or first distance values produced for a different line combination or with a fraction of these first distance values, it also being possible to carry out a plurality of comparisons simultaneously,
- and, as a function of the comparison result, either a specific value is allocated to first decision signals (CM) or a further comparison is carried out,
b)
- for in each case two picture lines, a difference value is determined which corresponds to the magnitude of the difference between the low-frequency components of the CVBS signals of the two lines,
- this difference value is compared with preselected values or difference values produced for a different line combination or with a fraction of these difference values, it also being possible to carry out a plurality of comparisons simultaneously,
- and, as a function of the comparison result, either a specific value is allocated to second decision signals (LM) or a further comparison is carried out,
c)
- in a complex plane spanned by the colour component signals, a second and third distance value are determined, the second distance value corresponding to the distance of the sum of the colour signals of two lines, which colour signals are given by the two colour component signals (U, V), from the origin (decs, dacs), and the third distance value corresponding to the distance of one colour signal of a line, which colour signal is given by the two colour component signals (U*, V*), from the origin (da, dc, de),
- second distance values are compared with third distance values or with a fraction of these third distance values, and third distance values of one line are compared with third distance values of another line or with a fraction of these third distance values, it also being possible to carry out a plurality of comparisons simultaneously,
- and, as a function of the comparison results, a binary value is respectively allocated to second decision signals (XC1, XC2, XC3),
d)
- for both colour component signals, first and second summation values are determined, the first summation value corresponding to the magnitude of the sum of one of the two colour component signals (U*, V*) of the plurality of lines, and the second summation value corresponding to the sum of the magnitudes of one of the two colour component signals (U*, V*), it being possible to perform different weighting of the colour component signals of the different lines,
- first summation values are compared with second summation values or with a fraction of these second summation values, and first summation values of the two colour components are compared with a specific value, it also being possible to carry out a plurality of comparisons simultaneously,
- and, as a function of the comparison results, a binary value is respectively allocated to third decision signals (XC4, XC5),
e)
and the decision signals (CM, LM, XC1 - XC5) are used to select a combination.

6. Circuit arrangement for separating luminance and chrominance signals of a CVBS signal (CVBS) by a combination of a plurality of picture lines, whereby a demodulator (DEM2) is provided, which demodulates two colour component signals (U*, V*) from the CVBS signal, which colour component signals are fed together with the CVBS signal (CVBS) to a comb filter (CF2), **characterized in that** line memories (D1 - D6) are provided in the comb filter (CF2) in order to delay both the CVBS signal and the colour component signals, and that the CVBS and colour component signals of the differently delayed lines are fed to a decision logic unit (FM, DM), in which the spatial signal structure of the colour component signals and of the CVBS signal of the delayed and the non-delayed lines are analysed in order to select a combination of a plurality of picture lines, and to one or more switching and averaging blocks (SL, SC1, SC2), in which, controlled by the selected combination, a luminance signal (Y) and a colour difference signal (U, V) are generated.

7. Circuit arrangement according to Claim 6, **characterized in that** the CVBS signal fed to the comb filter (CF2) is divided for the delayed and the non-delayed lines in the comb filter into a high-pass component and a low-pass component by means of a high-pass filter/low-pass filter combination (LHF1, LHF2, LHF3), and only the high-pass components are fed to the switching and averaging block (SL) and only the low-pass components are fed to the decision logic unit (FM, DM).

8. Circuit arrangement according to one of Claims 6 - 7, **characterized in that** the generated colour difference signals are fed to median filters (M1, M2), which average the colour difference signals over a plurality of lines, and that provision is made of an adder (AL) which adds the low-pass component to the luminance signal generated by said high-pass components of the delayed CVBS signal.

9. Circuit arrangement according to one of Claims 6 - 8, **characterized in that** the decision logic unit (FM, DM) has a first block (FM), to which the differently delayed lines are fed, different distance, difference and summation signals being calculated from the signals that have been fed, these values being compared with preselected values or other calculated values as a function of the comparison result, decision signals being determined, and whereby the decision signals are fed to a second block (DM), in which one or more decision values (CD, LD) are determined for each combination of the decision signals, which decision values are fed to the switching and averaging block or blocks (SC, SC1, SC2) for driving purposes.

## Revendications

1. Procédé pour la séparation des signaux de luminance et de chrominance dans un signal composite de couleur (FBAS) via une combinaison de plusieurs lignes de balayage, le procédé comprenant les étapes suivantes :
- la démodulation de deuxièmes signaux de composantes de couleur (U*, V*) à partir du signal composite de couleur ;
- la fourniture des signaux de composantes de couleur démodulés (U*, V*), ainsi que du signal composite de couleur (FBAS), à un filtre en peigne (CF2) ;
**caractérisé par** :
- le retardement par lignes du signal composite de couleur et des signaux de composantes de couleur dans le filtre en peigne (CF2) ;
- l'analyse (FM) de la structure de signal spatiale des signaux de composantes de couleur et du signal composite de couleur des lignes retardées et des lignes non retardées ;
- le choix (DM) d'une combinaison de plusieurs lignes de balayage basé sur la structure de signal spatiale analysée ; et
- la génération d'un signal de luminance (Y) et de signaux de différence de couleur (U, V) via la combinaison choisie à partir du signal composite de couleur et des signaux de composantes de couleur retardés et non retardés.

2. Procédé selon la revendication 1, **caractérisé en ce que,** lors de l'analyse, seule la partie basse fréquence (LPa, LPc, LPe) du signal composite de couleur est exploitée, et les signaux de composantes de couleur (U*, V*) à côté des signaux de différence de couleur (U, V) contiennent encore la partie haute fréquence des signaux de luminance.

3. Procédé selon la revendication 1 ou 2, **caractérisé en ce que** le signal composite de couleur (FBAS) ainsi que les signaux de composantes de couleur (U*, V*) sont retardés à chaque fois d'un nombre total de lignes et du double de ce nombre et **en ce que**, à partir de la partie haute fréquence du signal composite de couleur ainsi que des signaux de composantes de couleur de trois lignes non retardée, à retardement simple et à retardement double respectivement, les signaux de luminance haute fréquence et les signaux de différence de couleur de la ligne à retardement simple sont générés via une pondération correspondant à la combinaison optimale choisie.

4. Procédé selon la revendication 3, **caractérisé en ce que,** après la génération des signaux de différence de couleur et des signaux de luminance haute fréquence, un calcul de la moyenne (M1, M2) des signaux de différence de couleur est effectué sur plusieurs lignes, et la partie basse fréquence du signal composite de couleur à retardement simple est ajoutée (AL) au signal de luminance haute fréquence.

5. Procédé selon l'une des revendications 1 à 4, **caractérisé en ce que**
a)
- dans un plan complexe établi par les signaux de composantes de couleur, pour chacune de deux lignes de balayage, une première valeur d'écart (dac, dce, dae) est déterminée, laquelle correspond à l'écart des signaux de couleur des deux lignes fournis par les deux signaux de composantes de couleur (U*, V*),
- ces premières valeurs d'écart sont comparées à des valeurs prédéterminées ou à des premières valeurs d'écart qui sont fournies pour une autre combinaison de lignes, ou à une fraction de ces premières valeurs d'écart, où plusieurs comparaisons peuvent également être effectuées simultanément,
- et, en fonction du résultat de la comparaison, soit une valeur déterminée est attribuée à des premiers signaux de décision (CM), soit une autre comparaison est effectuée,
b)
- pour chacune de deux lignes de balayage, une valeur de différence est déterminée, laquelle correspond au montant de la différence des parties basse fréquence des signaux composites de couleur des deux lignes,
- cette valeur de différence est comparée à des valeurs prédéterminées ou à des valeurs de différence qui sont fournies pour une autre combinaison de lignes, ou à une fraction de ces valeurs de différence, où plusieurs comparaisons peuvent également être effectuées simultanément,
- et, en fonction du résultat de la comparaison, soit une valeur déterminée est attribuée à des deuxièmes signaux de décision (LM), soit une autre comparaison est effectuée,
c)
- dans un plan complexe établi par les signaux de composantes de couleur, une deuxième et une troisième valeurs d'écart sont déterminées, où la deuxième valeur d'écart correspond à l'écart de la somme des signaux de couleur de deuxièmes lignes d'origine (decs, dacs) fournis par les deux signaux de composantes de couleur (U, V), et la troisième valeur d'écart correspond à l'écart d'un signal de couleur d'une ligne d'origine (da, dc, de) fourni par les deux signaux de composantes de couleur (U*, V*),
- des deuxièmes valeurs d'écart sont comparées à des troisièmes valeurs d'écart ou à une fraction de ces troisièmes valeurs d'écart, et des troisièmes valeurs d'écart d'une ligne sont comparées à des troisièmes valeurs d'écart d'une autre ligne ou à une fraction de ces troisièmes valeurs d'écart, où plusieurs comparaisons peuvent également être effectuées simultanément,
- et, en fonction des résultats de la comparaison, une valeur binaire est attribuée à chacun des deuxièmes signaux de décision (XC1, XC2, XC3),
d)
- pour les deux signaux de composantes de couleur, des première et deuxième valeurs cumulées sont déterminées, où la première valeur cumulée correspond au montant de la somme de l'un des deux signaux de composantes de couleur (U*, V*) des diverses lignes, et la deuxième valeur cumulée correspond à la somme des montants de l'un des deux signaux de composantes de couleur (U*, V*), où une pondération différente des signaux de composantes de couleur des différentes lignes peut être effectuée
- des premières valeurs cumulées sont comparées à des deuxièmes valeurs cumulées ou à une fraction de ces deuxièmes valeurs cumulées, et des premières valeurs cumulées de deux composantes de couleur sont comparées à une valeur déterminée, où plusieurs comparaisons peuvent également être effectuées simultanément,
- et, en fonction des résultats de la comparaison, une valeur binaire est attribuée à chacun des troisièmes signaux de décision (XC4, XC5).
e)
et les signaux de décision (CM, LM, XC1 à XC5) sont utilisés pour choisir une combinaison.

6. Circuit pour la séparation des signaux de luminance et de chrominance dans un signal composite de couleur (FBAS) via une combinaison de plusieurs lignes de balayage, où un démodulateur (DEM2) est prévu, lequel démodule deux signaux de composantes de couleur (U*, V*) à partir du signal composite de couleur, lesquels sont fournis avec le signal composite de couleur (FBAS) à un filtre en peigne (CF2), **caractérisé en ce que,** dans le filtre en peigne (CF2), des registres de lignes (D1 à D6) sont prévus pour retarder le signal composite de couleur ainsi que les signaux de composantes de couleur, et **en ce que** le signal composite de couleur et les signaux de composantes de couleur des lignes retardées de manière différente sont fournis à une logique de décision (FM, DM), dans laquelle la structure de signal spatiale des signaux de composantes de couleur et du signal composite de couleur des lignes retardées et des lignes non retardées est analysée afin de choisir une combinaison de plusieurs lignes de balayage, et à un ou plusieurs bloc(s) de commutation et de calcul de la moyenne excités (SL, SC1, SC2) dans lesquels un signal de luminance (Y) et des signaux de différence de couleur (U, V) sont générés via la combinaison choisie.

7. Circuit selon la revendication 6, **caractérisé en ce que** le signal composite de couleur fourni au filtre en peigne (CF2) est divisé en une partie passe-haut et une partie passe-bas dans le filtre en peigne via une combinaison passe-haut - passe-bas (LHF1, LHF2, LHF3) à chaque fois pour les lignes retardées et les lignes non retardées, et seules les parties passe-haut sont fournies au bloc de commutation et de calcul de la moyenne (SL), et seules les parties passe-bas sont fournies à la logique de décision (FM, DM).

8. Circuit selon l'une des revendications 6 et 7, **caractérisé en ce que** les signaux de différence de couleur générés sont fournis à des filtres médians (M1, M2) qui effectuent un calcul de la moyenne des signaux de différence de couleur sur plusieurs lignes, et **en ce qu'**un additionneur (AL) est prévu, lequel ajoute la partie passe-bas du signal composite de couleur retardé au signal de luminance généré à partir des parties dites passe-haut.

9. Circuit selon l'une des revendications 6 à 8, **caractérisé en ce que** la logique de décision (FM, DM) présente un premier bloc (FM) auquel sont fournies les lignes retardées de manière différente, où différents signaux d'écart, de différence et de somme sont calculés à partir des signaux fournis, ces valeurs sont comparées à des valeurs prédéterminées ou à d'autres valeurs calculées, des signaux de décision sont déterminés en fonction du résultat de la comparaison, et où les signaux de décision sont fournis à un deuxième bloc (DM) dans lequel, pour chaque combinaison des signaux de décision, une ou plusieurs valeur(s) de décision (CD, LD) sont déterminées, lesquelles sont fournies au(x) bloc(s) de commutation et de calcul de la moyenne (SC, SC1, SC2) pour excitation.
